# FASCICULE DE BREVET EUROPEEN

(11) **EP 4 133 206 B1**
(45) Date de publication et mention de la délivrance du brevet: **20.08.2025**
(21) Numéro de dépôt: 21713031.9
(22) Date de dépôt: 23.03.2021
(51) Int. Cl.: F17C 5/06

(54) **DISPOSITIF ET PROCÉDÉ DE REMPLISSAGE DE RÉSERVOIRS DE GAZ SOUS PRESSION**
VORRICHTUNG UND VERFAHREN ZUM BEFÜLLEN VON DRUCKGASTANKS
DEVICE AND METHOD FOR FILLING PRESSURISED GAS TANKS

(30) Priorité: 10.04.2020 FR 2003617
(43) Date de publication de la demande: 15.02.2023
(73) Titulaire: L'Air Liquide, Société Anonyme pour l'Etude et l'Exploitation des Procédés Georges Claude, 75007 Paris (FR)
(72) Inventeur: FISCHER, Benjamin, 78350 LES LOGES-EN-JOSAS (FR); PAOLI, Hervé, 78350 LES LOGES-EN-JOSAS (FR)
(74) Mandataire: Air Liquide
(86) Numéro de dépôt international: PCT/EP2021/057390
(87) Numéro de publication internationale: WO 2021/204527

(56) Documents cités:
- FR-A1- 3 067 095
- US-A- 5 406 988
- US-A1- 2009 236 006
- US-A1- 2013 008 557
- US-A1- 2018 080 608
- US-A1- 2019 178 447

## Description

L'invention concerne un dispositif et procédé de remplissage de réservoirs de gaz sous pression.

FR3067095A1 divulgue un tel dispositif.

L'invention concerne plus particulièrement un dispositif de remplissage de réservoirs de gaz sous pression, en particulier de réservoirs d'hydrogène de véhicules, comprenant un circuit de transfert de fluide ayant une extrémité amont raccordée à une pluralité de sources de fluide sous pression et une extrémité aval comprenant au moins une terminaison de distribution destinée à être raccordée à un réservoir à remplir, les sources étant reliées en parallèle à la au moins une terminaison.

Des véhicules de stockage d'hydrogène à haute pression sont utilisés pour alimenter les différentes stations de remplissage. Afin d'alimenter les stations dans les meilleures conditions, les stockages de ces véhicules peuvent être vidés selon le principe de la cascade.

Des solutions connues assurent le remplissage de réservoirs à partir d'une source de gaz sous pression et pilotant la vitesse de transfert de gaz en à jouant sur la perte de charge dans le circuit. Ceci peut être réalisé en utilisant un jeu ce plusieurs vannes en parallèle afin d'ajuster le débit.

Dans certains cas, les débits de transfert doivent être élevés et les équipements disponibles sur le marché ne permettent pas d'obtenir des circuits compatibles avec ces débits.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que chaque source comprend une sortie de fluide raccordée à une vanne de sortie respective, les sources étant raccordées en parallèle en sous-groupes distincts à des lignes de transfert respectives, c'est-à-dire que toutes les sources d'un même sous-groupe sont raccordées en parallèle à une ligne de transfert dédiée, plusieurs sous-groupe et de préférence tous les sous-groupes de sources étant composés chacun de plusieurs sources, les lignes de transfert étant raccordées en parallèle à la au moins une terminaison de distribution et comprenant chacune une vanne de transfert respective, la au moins une terminaison de distribution comprenant un ensemble de vanne (s) de contrôle, la au moins une terminaison de distribution et son ensemble de vanne (s) de contrôle étant dimensionnés pour transférer un débit de gaz de remplissage maximal déterminé, les vannes de sortie, les lignes de transfert et les vannes de transfert étant dimensionnées pour transférer un débit de gaz de transfert maximal qui est inférieur au débit de gaz de remplissage maximal, la somme de plusieurs débits de gaz de transfert maximaux fournis par plusieurs vannes de sortie et plusieurs lignes de transfert étant supérieure ou égal au débit de gaz de remplissage maximal. Par ailleurs, des modes de réalisation de l'invention peuvent comporter l'une ou plusieurs des caractéristiques suivantes :
- les sous-groupes de sources comprennent chacun deux, trois ou plus de trois sources raccordées en parallèle à une ligne de transfert dédiée,
- le dispositif comprend deux, trois ou plus de trois sous-groupes de sources,
- le coefficient de débit de l'ensemble de vanne (s) de contrôle de la au moins une terminaison de distribution et est compris entre 3 à 6 et de préférence égal à 4,5, le coefficient de débit de chaque vanne de sortie et des vannes des lignes de transfert étant compris entre un et deux et de préférence égal à 1,5,
- le dispositif comprend plusieurs terminaisons de distribution raccordées en parallèle aux lignes de transfert via des lignes indépendantes permettant le transfert de gaz simultané dans les terminaisons à partir de sources identiques ou distinctes et à des pressions ou débits identiques ou distincts,
- au moins une partie des vannes sont des vannes pilotées, le dispositif comprenant un organe électronique de stockage et de traitement de données configuré pour commander lesdites vannes pilotées,
- l'organe électronique de stockage et de traitement de données est configuré pour commander l'ouverture et la fermeture des vannes pour remplir un réservoir raccordé à la au moins une terminaison en réalisant des équilibrages de pressions successifs entre des sources et le réservoir à remplir selon le principe de cascade,
- l'organe électronique de stockage et de traitement de données est configuré pour réaliser des équilibrages de pressions successifs entre des sources et le réservoir à remplir selon le principe de cascade avec des sources d'un même sous-groupe ou des sources des sous-groupes distincts,
- l'organe électronique de stockage et de traitement de données est configuré pour transférer dans le réservoir un débit de gaz consigne déterminé supérieur au débit de gaz de transfert maximal de chacune vanne de sortie et de chaque ligne de transfert, en réalisant des équilibrages de pressions simultanés entre plusieurs sources et le réservoir,
- l'organe électronique de stockage et de traitement de données est configuré pour réaliser des équilibrages de pressions simultanés entre d'une part plusieurs sources appartenant à de sous-groupes distincts et, d'autre part le réservoir.

L'invention concerne également un procédé de remplissage d'un au moins un réservoir de gaz sous pression, en particulier au moins un réservoir d'hydrogène de véhicule, utilisant un dispositif selon l'une quelconque des caractéristiques ci-dessus ou ci-dessous, le procédé comprenant des équilibrages de pressions entre des sources et le réservoir à remplir.

Selon d'autres particularités possibles :
- le procédé comporte une étape de transfert dans le au moins un réservoir d'un débit de gaz consigne déterminé supérieur au débit de gaz de transfert maximal de chacune vanne de sortie et chaque ligne de transfert, ledit débit de gaz consigne étant obtenu en cumulant les débits de gaz fournis simultanément par plusieurs sources appartenant à de sous-groupes identiques ou distincts,
- le procédé comporte une étape de transfert dans le au moins un réservoir d'un débit de gaz consigne déterminé supérieur au débit de gaz de transfert maximal de chacune vanne de sortie et chaque ligne de transfert, ledit débit de gaz consigne étant obtenu en cumulant les débits de gaz fournis simultanément par deux, trois ou plus de trois sources appartenant à de sous-groupes identiques ou distincts.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'un dispositif de remplissage selon un premier exemple de réalisation de l'invention,
[Fig. 2] représente une vue schématique et partielle illustrant la structure et le fonctionnement d'un dispositif de remplissage selon un deuxième exemple de réalisation de l'invention.

Le dispositif 1 de remplissage de réservoirs de gaz sous pression représenté comprend un circuit de transfert de fluide ayant une extrémité amont raccordée à une pluralité de sources 2 à 10 de fluide sous pression. Ces sources 2 à 10 peuvent comprendre par exemple des stockages de gaz à haute pression (par exemple entre 150 et 1000bars). Ces stockages peuvent notamment être mobiles, par exemple monté sur un même semi-remorque ou des semi-remorques distincts.

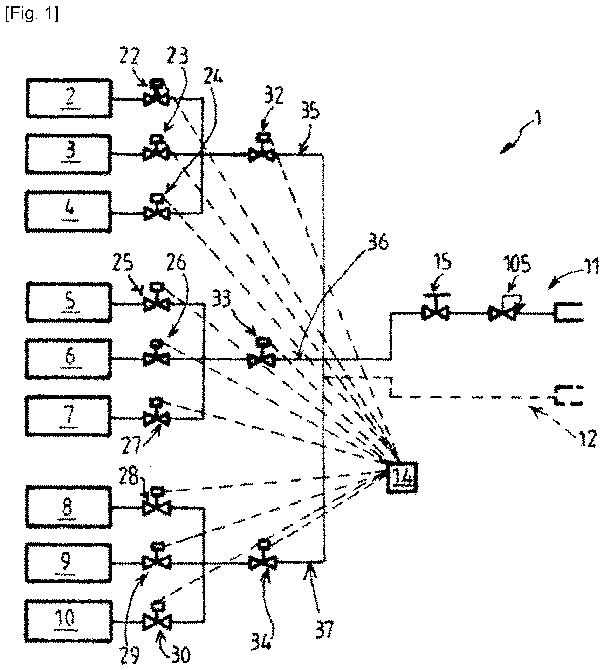

Le circuit comprend au moins une terminaison de distribution destinée à être raccordée à un réservoir à remplir, par exemple via une buse au niveau d'un raccord rapide. Dans l'exemple de la [Fig. 1], le dispositif comprend deux terminaisons 11, 12 de distribution dont l'une 12 est représentée symboliquement en pointillées. Une seule terminaison de distribution (ou plus de deux, notamment trois) est aussi envisageable. La ou les terminaisons 11, 12 peuvent comprendre au moins l'un parmi : un clapet ou vanne 15, un détendeur ou régulateur de 105 de pression et/ou de débit, un raccord rapide.

Les sources 2 à 10 sont reliées en parallèle aux terminaisons 11, 12, 13 via des conduites appropriées. Chaque source 2 à 10 comprend une sortie de fluide raccordée à au moins une vanne de sortie 22 à 30 respective. A noter que l'orifice de chaque source et sa vanne associée sont désignés dans la suite par soucis de simplification par le qualificatif « de sortie ». Bien entendu, cet orifice de sortie et cette vanne de sortie associée peuvent être utilisées le cas échéant pour l'entrée de fluide lorsque la source doit être remplie à nouveau (notamment si la source ne dispose pas d'un orifice de remplissage distinct).

Les sources 2 à 10 sont raccordées en parallèle en sous-groupes distincts à des lignes de transfert 35 à 37 respectives. C'est-à-dire que toutes les sources d'un même sous-groupe sont raccordées en parallèle à une ligne de transfert 35 à 37 dédiée. De préférence, les sous-groupes de sources sont composés chacun de plusieurs sources. Dans ces exemples non limitatifs le dispositif comprend neuf sources réparties en trois sous-groupes reliés respectivement à trois lignes de transfert 35 à 37. Bien entendu, le dispositif 1 pourrait comporter plus ou moins de neuf sources et réparties en plus ou moins de sous-groupes.

Plus en aval (en direction des terminaisons 11, 12 de distribution), les lignes de transfert 35 à 37 sont raccordées en parallèle aux terminaisons 11, 12, 13 de distribution.

Comme illustré, de préférence chacune des lignes de transfert 35 à 37 comprend au moins une vanne de transfert 32 à 34 respective. Plus en aval, les terminaisons 11, 12, 13 de distribution peuvent comprendre un ensemble de vanne (s) de contrôle, par exemple au moins un organe(s) fluidique parmi : une vanne (de préférence pilotée), un régulateur de débit et/ou de pression, une portion flexible, un raccord rapide, une buse.

Les terminaisons 11, 12, 13 de distribution et les organes associés (vanne(s) ...) sont dimensionnés pour permettre de transférer un débit de gaz de remplissage maximal déterminé qui peut être un débit relativement important par exemple de l'ordre de 1000kg/h (tandis que le débit peut être de l'ordre de deux à dix fois moins, notamment cinq fois moins pour les lignes de transfert).

Ceci peut notamment requis pour transférer des débits relativement importants dans des réservoirs de grande capacité et notamment des réservoirs de camions ou trains.

De préférence tout ou partie du circuit en amont des terminaisons 11, 12, 13 de distribution est dimensionné pour transférer un débit de gaz de transfert maximal qui est inférieur à ce débit de gaz de remplissage maximal. C'est-à dire que les vannes de sortie 22 à 30, les lignes de transfert 35 à 37 et les vannes de transfert 32 à 34 respective (et les conduites reliant les vannes de sortie aux lignes de transfert) peuvent sous-dimensionnées pour un débit de gaz de transfert maximal qui est inférieur au débit de gaz de remplissage maximal.

Cependant, la somme de plusieurs débits de gaz de transfert maximaux fournis par plusieurs vannes de sortie 22 à 30 et plusieurs lignes de transfert 35 à 37 est configuré pour être supérieure ou égal au débit de gaz de remplissage maximal. C'est-à-dire que, ce débit de gaz de remplissage maximal peut être atteint en utilisant simultanément plusieurs sources et lignes de transfert correspondantes.

En associant ainsi les sources 2 à 10 et en les mutualisant le cas échéant, il est possible de fournir aux terminaisons 11, 12, 13 de distribution aussi bien des débits relativement faibles que des débits relativement importants sans avoir à dimensionner l'ensemble du circuit pour le deuxième cas (forts débits). Ceci réduit le coût et les contraintes de réalisation du circuit sans limiter les applications possibles. Par exemple, les conduites, lignes et vannes en amont peuvent avoir des diamètres ou coefficients de débit (Cv) de 1,5 au lieu de vannes ou conduites de diamètres plus importants ou coefficients de débit Cv de 4,5 (ce dimensionnement plus grands étant réservé aux terminaisons 11, 12, 13 de distribution).

Ceci permet notamment d'utiliser des lignes, conduites, flexibles, vannes de dimensions plus réduites.

Les débits de gaz maximal déterminés précités peuvent être définis par l'un au mois parmi : le diamètre (section) de passage du gaz, le coefficient de passage (Cv) dans la portion de circuit déterminée, ou tout autre organe de limitation de débit.

Ainsi, à toutes conditions égales par ailleurs (pression, vitesse...) lesdits débits maximal précités peuvent être définis par les diamètres internes des terminaisons, vannes et/ou portion(s) de lignes précités.

Dans le cas par exemple d'une vitesse maximale dans les tuyauteries de 100 m/s, une pression d'alimentation 635 bar, trois terminaisons (flexibles) de 10mm de diamètre interne, il serait possible théoriquement d'obtenir des débits de l'ordre de 3500 Nm3/h par flexible indépendamment soit environ 11 000Nm3/h au total (trois flexibles).

Pour obtenir le même débit avec les mêmes hypothèses sur une installation classique (un seul flexible), il serait nécessaire d'avoir un flexible de diamètre interne 17,5mm.

Ceci est cependant un exemple non limitatif. En effet, en utilisant des flexibles de plus grand diamètre (par exemple trois flexibles de diamètres 12mm équivalent à un diamètre 21mm permettant d'acheminer 3 x 5000Nm3/h), le gain est d'autant plus intéressant qu'il est indexé sur la section de passage et augmente donc proportionnellement au carré du diamètre.

Bien entendu deux, quatre ou tout au nombre de terminaisons (flexibles) peuvent être prévues au-delà de cet exemple non limitatif.

Pour fournir un débit important (par exemple le débit de gaz de remplissage maximal), le gaz peut être fourni simultanément par deux, trois ou plus de trois sources appartenant par exemple à trois sous-groupes. Par exemple, en fonction des pressions dans les sources, les premières sources 2, 5, 8 (dans l'ordre de haut en bas sur les représentations) peuvent être utilisées simultanément pour fournir un débit important. Alternativement les secondes sources 3, 6, 9 (ou les trois dernières sources 4, 7, 10) des trois sous-ensembles peuvent être associées simultanément.

Pour fournir des débits moins importants d'autres associations de sources peuvent être envisagées en fonction du débit aval requis et des pressions dans les sources.

Toutes les combinaisons possibles sont envisageables.

Le dispositif permet le transfert le plus rapide possible d'une grande quantité de gaz entre des sources et une terminaison de distribution servant à remplir le réservoir en aval.

Les sources 2 à 10 peuvent être utilisées de façon séquentielle avec des pressions croissantes afin de toujours maximiser le différentiel de pression entre la source utilisée et le réservoir à remplir.

Ces regroupements de sources utilisés sont réalisés en fonction de la pression dans chacune des sources. Les transferts sont ainsi réalisés en limitant la génération de froid dans une des sections due à l'effet Joules Thomson (les forts débits de soutirage s'accompagnent de grandes variations de pression dans les sections, ce qui génère du froid).

De préférence, lorsque le dispositif 1 comprend plusieurs terminaisons 11, 12, 13 de distribution, celles-ci sont raccordées en parallèles aux lignes de transfert 35 à 37 (via des conduites parallèles le cas échéant) pour permettre l'alimentation simultanée et différenciée de plusieurs terminaisons 11, 12, 13 de distribution avec le cas échant des niveaux de pression différents.

Ainsi, en fonction des pressions dans les sources, les sous-groupes peuvent être recomposés en associant des sources de sous-groupes différents. Ces sous-groupes recomposés sont composés par exemple de trois sources.

De préférence, tout ou partie des vannes sont des vannes pilotées, le dispositif 1 pouvant comprendre ou être associé à un organe 14 électronique de stockage et de traitement de données (comprenant un calculateur, ordinateur ou microprocesseur) configuré pour commander lesdites vannes pilotées.

Cet organe 14 électronique de commande peut en particulier être configuré pour commander l'ouverture et la fermeture des vannes pour remplir un réservoir raccordé à la au moins une terminaison 11, 12, 13 de distribution en réalisant des équilibrages de pressions successifs optimales entre des sources et le réservoir à remplir selon le principe de cascade.

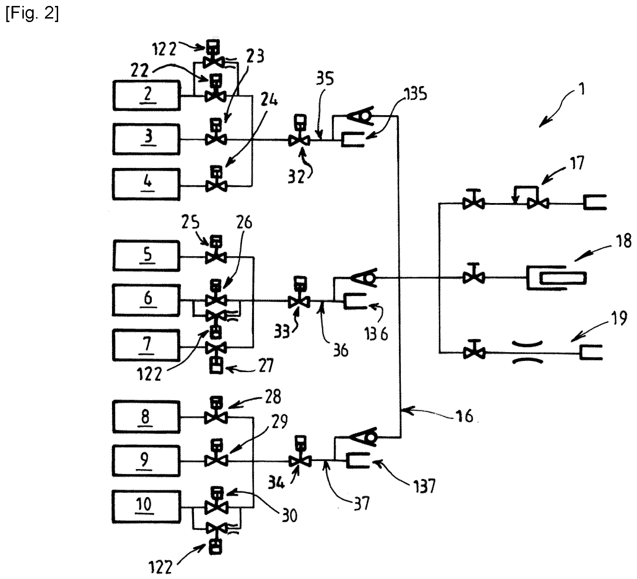

Comme illustré à la [Fig. 2], l'une au moins des sources que chaque sous-groupe peut être pourvue d'une ligne de dérivation 122 de la vanne de sortie et comprenant une vanne et une restriction de débit. Ceci permet assure une montée en pression progressive en aval lorsque cette source possède un différentiel de pression trop important avec l'aval.

De plus, les lignes de transfert 35 à 37 peuvent être reliées en parallèle à une conduite 16 d'équilibrage commune via des clapets anti-retour respectifs. Des lignes de raccordement 17, 18 et 19 peuvent être reliées en parallèles à cette conduite 16 d'équilibrage. Ces lignes de raccordement 17, 18, 19 peuvent être munies de clapets, vannes, restrictions ou détendeur en amont de raccords de liaison. Ceci permet de réaliser des fonctions d'analyse du gaz, de réduction de pression et de purge des tuyauteries.

Comme illustré, des raccords 135, 136, 137 peuvent être prévus aux extrémités de chacune des lignes de transfert 35 à 37 pour être reliées aux terminaisons 11, 12, 13 de distribution (par exemple indépendante ou en parallèle comme dans le mode de réalisation de la [Fig.1]).

## Revendications

1. Dispositif de remplissage de réservoirs de gaz sous pression, en particulier de réservoirs d'hydrogène de véhicules, comprenant un circuit de transfert de fluide ayant une extrémité amont raccordée à une pluralité de sources (2 à 10) de fluide sous pression et une extrémité aval comprenant au moins une terminaison (11, 12, 13) de distribution destinée à être raccordée à un réservoir à remplir, les sources (2 à 10) étant reliées en parallèle à la au moins une terminaison (11, 12, 13), chaque source (2 à 10) comprenant une sortie de fluide raccordée à une vanne de sortie (22 à 30) respective, les sources (2 à 10) étant raccordées en parallèle en sous-groupes distincts à des lignes de transfert (35 à 37) respectives, c'est-à-dire que toutes les sources d'un même sous-groupe sont raccordées en parallèle à une ligne de transfert (35 à 37) dédiée, plusieurs sous-groupe et de préférence tous les sous-groupes de sources étant composés chacun de plusieurs sources, les lignes de transfert (35 à 37) étant raccordées en parallèle à la au moins une terminaison (11, 12, 13) de distribution et comprenant chacune une vanne de transfert (32 à 34) respective, la au moins une terminaison (11, 12, 13) de distribution comprenant un ensemble de vanne (s) de contrôle, la au moins une terminaison (11, 12, 13) de distribution et son ensemble de vanne (s) de contrôle étant dimensionnés pour transférer un débit de gaz de remplissage maximal déterminé, les vannes de sortie (22 à 30), les lignes de transfert (35 à 37) et les vannes de transfert (32 à 34) étant dimensionnées pour transférer un débit de gaz de transfert maximal qui est inférieur au débit de gaz de remplissage maximal, la somme de plusieurs débits de gaz de transfert maximaux fournis par plusieurs vannes de sortie (22 à 30) et plusieurs lignes de transfert (35 à 37) étant supérieure ou égal au débit de gaz de remplissage maximal.

2. Dispositif de remplissage selon la revendication 1, **caractérisé en ce que** les débits de gaz maximal déterminés sont limités via par l'un au mois parmi : un diamètre (section) de passage du gaz, un coefficient de passage (Cv).

3. Dispositif selon la revendication 1 ou 2, **caractérisé en ce que** les sous-groupes de sources comprennent chacun deux, trois ou plus de trois sources raccordées en parallèle à une ligne de transfert (35 à 37) dédiée.

4. Dispositif selon l'une quelconque des revendications 1 à 3, **caractérisé en ce qu'**il comprend deux, trois ou plus de trois sous-groupes de sources.

5. Dispositif selon l'une quelconque des revendications 1 à 4, **caractérisé en ce que** le coefficient de débit de l'ensemble de vanne (s) de contrôle de la au moins une terminaison (11, 123) de distribution et est compris entre trois à six et de préférence égal à 4,5, le coefficient de débit de chaque vanne de sortie (22 à 30) et des vannes des lignes de transfert (35 à 37) étant compris entre un et deux et de préférence égal à 1,5.

6. Dispositif selon l'une quelconque des revendications 1 à 5, **caractérisé en ce qu'**il comprend plusieurs terminaisons (11, 12, 13) de distribution raccordées en parallèle aux lignes de transfert (35 à 37) via des lignes indépendantes permettant le transfert de gaz simultané dans les terminaisons à partir de sources identiques ou distinctes et à des pressions ou débits identiques ou distincts.

7. Dispositif selon l'une quelconque des revendications 1 à 6, **caractérisé en ce qu'**au moins une partie des vannes sont des vannes pilotées, le dispositif (1) comprenant un organe (14) électronique de stockage et de traitement de données configuré pour commander lesdites vannes pilotées.

8. Dispositif selon la revendication 7, **caractérisé en ce que** l'organe (14) électronique de stockage et de traitement de données est configuré pour commander l'ouverture et la fermeture des vannes pour remplir un réservoir raccordé à la au moins une terminaison (11, 12, 13) en réalisant des équilibrages de pressions successifs entre des sources et le réservoir à remplir selon le principe de cascade.

9. Dispositif selon la revendication 8, **caractérisé en ce que** l'organe (14) électronique de stockage et de traitement de données est configuré pour transférer dans le réservoir un débit de gaz consigne déterminé supérieur au débit de gaz de transfert maximal de chacune vanne de sortie (22 à 30) et de chaque ligne de transfert (35 à 37), en réalisant des équilibrages de pressions simultanés entre plusieurs sources et le réservoir.

10. Dispositif selon la revendication 9, **caractérisé en ce que** l'organe (14) électronique de stockage et de traitement de données est configuré pour réaliser des équilibrages de pressions simultanés entre d'une part plusieurs sources appartenant à de sous-groupes distincts et, d'autre part le réservoir.

11. Procédé de remplissage d'un au moins un réservoir de gaz sous pression, en particulier au moins un réservoir d'hydrogène de véhicule, utilisant un dispositif (1) selon l'une quelconque des revendications 1 à 10, **caractérisé en ce qu'**il comprend des équilibrages de pressions entre des sources et le réservoir à remplir.

12. Procédé selon la revendication 11, **caractérisé en ce qu'**il comporte une étape de transfert dans le au moins un réservoir d'un débit de gaz consigne déterminé supérieur au débit de gaz de transfert maximal de chacune vanne de sortie (22 à 30) et chaque ligne de transfert (35 à 37), ledit débit de gaz consigne étant obtenu en cumulant les débits de gaz fournis simultanément par plusieurs sources appartenant à de sous-groupes identiques ou distincts, notamment deux, trois ou plus de trois sources appartenant à de sous-groupes identiques ou distincts.

## Patentansprüche

1. Vorrichtung zum Befüllen von Druckgastanks, insbesondere von Wasserstofftanks von Fahrzeugen, umfassend einen Fluidtransferkreis mit einem stromaufwärtigen Ende, das an eine Mehrzahl von Quellen (2 bis 10) für Fluid unter Druck angeschlossen ist, und einem stromabwärtigen Ende, das mindestens ein Ausgabeendstück (11, 12, 13) umfasst, das dazu bestimmt ist, an einen zu befüllenden Tank angeschlossen zu werden, wobei die Quellen (2 bis 10) parallel mit dem mindestens einen Endstück (11, 12, 13) verbunden sind, wobei jede Quelle (2 bis 10) einen Fluidauslass umfasst, der an ein jeweiliges Auslassventil (22 bis 30) angeschlossen ist, wobei die Quellen (2 bis 10) parallel in verschiedenen Untergruppen an jeweilige Transferleitungen (35 bis 37) angeschlossen sind, d. h., dass alle Quellen einer selben Untergruppe parallel an eine dedizierte Transferleitung (35 bis 37) angeschlossen sind, wobei mehrere Untergruppen und bevorzugt alle Untergruppen jeweils aus mehreren Quellen bestehen, wobei die Transferleitungen (35 bis 37) parallel an das mindestens eine Ausgabeendstück (11, 12, 13) angeschlossen sind und jeweils ein jeweiliges Transferventil (32 bis 34) umfassen, wobei das mindestens eine Ausgabeendstück (11, 12, 13) eine Anordnung aus einem oder mehreren Steuerventil(en) umfasst, wobei das mindestens eine Ausgabeendstück (11, 12, 13) und seine Anordnung aus einem oder mehreren Steuerventil(en) dazu ausgelegt sind, einen bestimmten maximalen Füllgasvolumenstrom zu transferieren, wobei die Auslassventile (22 bis 30), die Transferleitungen (35 bis 37) und die Transferventile (32 bis 34) dazu ausgelegt sind, einen maximalen Transfergasvolumenstrom zu transferieren, der geringer als der maximale Füllgasvolumenstrom ist, wobei die Summe aus mehreren maximalen Transfergasvolumenströmen, die von mehreren Auslassventilen (22 bis 30) und mehreren Transferleitungen (35 bis 37) abgegeben werden, größer oder gleich dem maximalen Füllgasvolumenstrom ist.

2. Vorrichtung zum Befüllen nach Anspruch 1, **dadurch gekennzeichnet, dass** die bestimmten maximalen Gasvolumenströme über durch mindestens einen begrenzt werden unter: einem Gasdurchlassdurchmesser (Querschnitt), einem Durchlasskoeffizienten (Cv).

3. Vorrichtung nach Anspruch 1 oder 2, **dadurch gekennzeichnet, dass** die Untergruppen von Quellen jeweils zwei, drei oder mehr als drei Quellen umfassen, die parallel an eine dedizierte Transferleitung (35 bis 37) angeschlossen sind.

4. Vorrichtung nach einem der Ansprüche 1 bis 3, **dadurch gekennzeichnet, dass** sie zwei, drei oder mehr als drei Untergruppen von Quellen umfasst.

5. Vorrichtung nach einem der Ansprüche 1 bis 4, **dadurch gekennzeichnet, dass** der Volumenstromkoeffizient der Anordnung aus einem oder mehreren Steuerventil(en) des mindestens einen Ausgabeendstücks (11, 123) zwischen drei und sechs liegt und bevorzugt 4,5 beträgt, wobei der Volumenstromkoeffizient jedes Auslassventils (22 bis 30) und der Ventile der Transferleitungen (35 bis 37) zwischen eins und zwei liegt und bevorzugt 1,5 beträgt.

6. Vorrichtung nach einem der Ansprüche 1 bis 5, **dadurch gekennzeichnet, dass** sie mehrere Ausgabeendstücke (11, 12, 13) umfasst, die parallel an die Transferleitungen (35 bis 37) über unabhängige Leitungen angeschlossen sind, die den gleichzeitigen Transfer von Gas in die Endstücke ausgehend von gleichen oder verschiedenen Quellen und mit gleichen oder verschiedenen Drücken oder Volumenströmen ermöglichen.

7. Vorrichtung nach einem der Ansprüche 1 bis 6, **dadurch gekennzeichnet, dass** mindestens ein Teil der Ventile vorgesteuerte Ventile sind, wobei die Vorrichtung (1) ein elektronisches Organ (14) zur Datenspeicherung und -verarbeitung umfasst, das dazu ausgestaltet ist, die vorgesteuerten Ventile zu steuern.

8. Vorrichtung nach Anspruch 7, **dadurch gekennzeichnet, dass** das elektronische Organ (14) zur Datenspeicherung und -verarbeitung dazu ausgestaltet ist, das Öffnen und das Schließen der Ventile zu steuern, um einen an das mindestens eine Endstück (11, 12, 13) angeschlossenen Tank zu befüllen, wobei sukzessive Druckausgleiche zwischen Quellen und dem zu befüllenden Tank nach dem Kaskadenprinzip ausgeführt werden.

9. Vorrichtung nach Anspruch 8, **dadurch gekennzeichnet, dass** das elektronische Organ (14) zur Datenspeicherung und -verarbeitung dazu ausgestaltet ist, in den Tank einen bestimmten Sollgasvolumenstrom zu transferieren, der größer als der maximale Transfergasvolumenstrom jedes Auslassventils (22 bis 30) und jeder Transferleitung (35 bis 37) ist, wobei gleichzeitige Druckausgleiche zwischen mehreren Quellen und dem Tank ausgeführt werden.

10. Vorrichtung nach Anspruch 9, **dadurch gekennzeichnet, dass** das elektronische Organ (14) zur Datenspeicherung und Verarbeitung dazu ausgestaltet ist, gleichzeitige Druckausgleiche zwischen mehreren Quellen, die zu verschiedenen Untergruppen gehören, auf der einen Seite und dem Tank auf der anderen Seite auszuführen.

11. Verfahren zum Befüllen mindestens eines Druckgastanks, insbesondere mindestens eines Fahrzeugwasserstofftanks, unter Verwendung einer Vorrichtung (1) nach einem der Ansprüche 1 bis 10, **dadurch gekennzeichnet, dass** es Druckausgleiche zwischen Quellen und dem zu befüllenden Tank umfasst.

12. Verfahren nach Anspruch 11, **dadurch gekennzeichnet, dass** es einen Schritt des Transfers in den mindestens einen Tank eines bestimmten Soll-Gasvolumenstroms umfasst, der größer als der maximale TransferGasvolumenstrom jedes Auslassventils (22 bis 30) und jeder Transferleitung (35 bis 37) ist, wobei der SollGasvolumenstrom erhalten ist, indem die Gasvolumenströme kumuliert werden, die gleichzeitig von mehreren Quellen abgegeben werden, die zu gleichen oder verschiedenen Untergruppen gehören, insbesondere zwei, drei oder mehr als drei Quellen, die zu gleichen oder verschiedenen Untergruppen gehören.

## Claims

1. Device for filling pressurized gas tanks, in particular hydrogen tanks of vehicles, comprising a fluid transfer circuit having an upstream end connected to a plurality of sources (2 to 10) of pressurized fluid and a downstream end comprising at least one dispenser (11, 12, 13) intended to be connected to a tank to be filled, the sources (2 to 10) being connected in parallel to the at least one dispenser (11, 12, 13), each source (2 to 10) comprising a fluid outlet connected to a respective outlet valve (22 to 30), the sources (2 to 10) being connected in parallel in different subgroups to respective transfer lines (35 to 37), i.e. all the sources of a same subgroup are connected in parallel to a dedicated transfer line (35 to 37), each of several subgroups and preferably all subgroups of sources comprising multiple sources, the transfer lines (35 to 37) being connected in parallel to the at least one dispenser (11, 12, 13) and each comprising a respective transfer valve (32 to 34), the at least one dispenser (11, 12, 13) comprising a set of control valve (s), the at least one dispenser (11, 12, 13) and its set of control valve(s) being dimensioned so as to transfer a predetermined maximum filling gas flow, the outlet valves (22 to 30), the transfer lines (35 to 37) and the transfer valves (32 to 34) being dimensioned so as to transfer a maximum transfer gas flow which is smaller than the maximum filling gas flow, the sum of a plurality of maximum transfer gas flows provided by a plurality of outlet valves (22 to 30) and a plurality of transfer lines (35 to 37) being greater than or equal to the maximum filling gas flow.

2. Filling device according to Claim 1, **characterized in that** the predetermined maximum gas flows are limited via at least one of: a gas passage diameter (cross-section), a passage coefficient (Cv).

3. Device according to Claim 1 or 2, **characterized in that** the subgroups of sources each comprise two, three or more than three sources connected in parallel to a dedicated transfer line (35 to 37).

4. Device according to any one of Claims 1 to 3, **characterized in that** it comprises two, three or more than three subgroups of sources.

5. Device according to any one of Claims 1 to 4, **characterized in that** the flow coefficient of the set of control valve(s) of the at least one dispenser (11, 123) is between three and six, and preferably equal to 4.5, the flow coefficient of each outlet valve (22 to 30) and of the transfer line valves (35 to 37) being between one and two, and preferably equal to 1.5.

6. Device according to any one of Claims 1 to 5, **characterized in that** it comprises a plurality of dispensers (11, 12, 13) connected in parallel to transfer lines (35 to 37) via independent lines, allowing the simultaneous transfer of gas into the dispensers from identical or different sources and at identical or different pressures or flow rates.

7. Device according to any one of Claims 1 to 6, **characterized in that** at least some of the valves are controlled valves, the device (1) comprising an electronic element (14) for data storage and processing which is configured to control said controlled valves.

8. Device according to Claim 7, **characterized in that** the electronic element (14) for data storage and processing is configured to control the opening and closure of the valves in order to fill a tank connected to the at least one dispenser (11, 12, 13) by performing successive pressure balancing adjustments between the sources and the tank to be filled using the cascade principle.

9. Device according to Claim 8, **characterized in that** the electronic element (14) for data storage and processing is configured to transfer to the tank a predetermined reference gas flow, which is greater than the maximum transfer gas flow of each outlet valve (22 to 30) and each transfer line (35 to 37), by performing simultaneous pressure balancing adjustments between a plurality of sources and the tank.

10. Device according to Claim 9, **characterized in that** the electronic element (14) for data storage and processing is configured to perform simultaneous pressure balancing adjustments between a plurality of sources belonging to different subgroups on one side and the tank on the other.

11. Method for filling at least one pressurized gas tank, in particular at least one hydrogen tank of a vehicle, using a device (1) according to any one of Claims 1 to 10, **characterized in that** it comprises pressure balancing adjustments between sources and the tank to be filled.

12. Method according to Claim 11, **characterized in that** it comprises a step of transferring to the at least one tank a predetermined reference gas flow which is greater than the maximum transfer gas flow of each outlet valve (22 to 30) and each transfer line (35 to 37), said reference gas flow being obtained by cumulation of the gas flows provided simultaneously by a plurality of sources belonging to identical or different subgroups, in particular two, three or more than three sources belonging to identical or different subgroups.
